# EUROPÄISCHE PATENTSCHRIFT

(11) **EP 1 607 591 B1**
(45) Veröffentlichungstag und Bekanntmachung des Hinweises auf die Patenterteilung: **13.04.2011**
(21) Anmeldenummer: 04102797.0
(22) Anmeldetag: 18.06.2004
(51) Int. Cl.: F01L 1/356

(54) **Verfahren zur Verstellung der Ventilöffnungsdauer**
Method for shifting valve working angle
Méthode pour ajuster la durée d'ouverture de soupape

(43) Veröffentlichungstag der Anmeldung: 21.12.2005
(73) Patentinhaber: Ford Global Technologies, LLC, A subsidary of Ford Motor Company, Dearborn, MI 48126 (US)
(72) Erfinder: Kluge, Torsten, 51491, Overath (DE); Figura, Michael Georg, 41542, Dormagen (DE); Schaefer, Claas, 50259, Pulheim (DE)
(74) Vertreter: Drömer, Hans-Carsten

(56) Entgegenhaltungen:
- JP-A- 2003 056 318
- SE-L- 9 701 230
- US-A- 4 723 517
- US-A- 5 361 736
- US-A- 5 975 037
- US-A1- 2002 056 427
- US-A1- 2003 104 886
- PATENT ABSTRACTS OF JAPAN Bd. 2003, Nr. 06, 3. Juni 2003 (2003-06-03) & JP 2003 056318 A (HITACHI UNISIA AUTOMOTIVE LTD), 26. Februar 2003 (2003-02-26)

## Beschreibung

Die Erfindung betrifft ein Verfahren zur Verstellung einer Ventilöffnungsdauer in einem Verbrennungsmotor und einen Verbrennungsmotor mit einem Nockentrieb, der eine Kurbelwelle und zumindest eine Nockenwelle aufweist.

Bekannte Nockentriebe erlauben eine kontinuierliche Drehbewegung der Nockenwelle. In Kombination mit dem Nockenprofil ist lediglich eine einzelne Einstellung bzw. Öffnungszeitfunktion für ein jeweiliges Ventil des Verbrennungsmotors möglich. Zur Einstellung der Nockenphasen sind Vorrichtungen zur Nockenphasenverstellung (VCT) bekannt. Bekannt sind zudem Systeme zur Verstellung einer Hubdauer, diese sind aber sehr aufwendig und kompliziert ausgeführt.

Die DE 39 11 955 A1 betrifft eine Einrichtung zur variablen Ventilsteuerung von Hubkolbenmotoren. Bei ketten- oder zahnriemengetriebenen Nockenwellen ist jeweils im zugbelasteten Strang ein Verstell-Spannrad angeordnet. Bei einer Hubverstellung ist die wirksame Länge der Kette oder des Zahnriemens zwischen Kurbelwellenrad und Einlaß-Nockenwellenrad oder zwischen Kurbelwellenrad und Auslaß-Nockenwellenrad und/oder zwischen Einlaß-Nockenwellenrad und Auslaß-Nockenwellenrad und umgekehrt verändert.

Wird ein Ventilöffnungshub über einen Kurbelwinkel aufgetragen, so ergibt sich eine Ventil-Erhebungskurve. Die Ventil-Erhebungskurve beschreibt einen Füllungsgrad eines Kraftstoff-Luft-Gemisches in dem Verbrennungsraum des Verbrennungsmotors.

Die US 4,723,517 offenbart einen Nockentrieb um zumindest einen Nocken derart anzutreiben, dass dieser eine variable Schwingung gleichzeitig mit dessen Drehung erfährt, um die Öffnungsdauer eines Ventils zu variieren. Ein Zahnrad dreht sich dabei synchron mit der Kurbelwelle. Ein Gleitelement ist dem Zahnrad drehbar zugeordnet, wobei diese relativ zum Zahnrad linear verschiebbar ist. Das Gleitelement und der Nocken drehen sich mit der Geschwindigkeit der Kurbelwelle. Aufgrund eines radialen Gleitens des Gleitelementes bewirkt ein Ritzel eine zusätzliche Drehung des Nockens relativ zum Zahnrad.

In der US 5,361,736 sind Mittel offenbart, die sowohl einen Öffnungs- als auch einen Schließwinkel von Ventilen eines Verbrennungsmotors variieren. Dies wird mit Elementen erreicht, die die momentane Phase der Nockenwelle bezogen auf die Phase der Kurbelwelle variieren, so dass ein ausgewähltes Steuerprogramm bewirkt, dass der Nocken eine längere oder eine kürzere Zeit mit einem Ventilstößel in Kontakt steht als nominell vorgesehen ist.

In der US 2002/0056427 A1 ist eine Nockenverstellung zur Verwendung in einer Maschine offenbart, die eine Kurbelwelle sowie eine erste und zweite Nockenwelle aufweist. Die Nockenverstellung umfasst ein ersten und ein zweites Zahnrad, die jeweils mit der zugeordneten ersten und zweiten Nockenwelle verbunden sind. Ein Verbindungselement verbindet die beiden Zahnräder. Ein Verstellmechanismus ist der Kurbelwelle zugeordnet. Der Verstellmechanismus weist einen Trommelabschnitt auf, der eine Vielzahl peripher angeordneter Zähne hat, die mit dem Verbindungselement verbunden sind. Die Trommel bewirkt eine Drehung der Nockenwelle aufgrund der Drehung der Kurbelwelle. Die Trommel ist weiterhin mit einer zusätzlichen Drehung bezogen auf die Kurbelwellendrehung beaufschlagbar. Die zusätzliche Drehung bewirkt bezogen auf die Drehung der Kurbelwelle ein Vorlaufen bzw. Verzögern der ersten und zweiten Nockenwelle.

Der Erfindung liegt die Aufgabe zugrunde, einen Verbrennungsmotor mit einfachen aber effizienten Mitteln zu verbessern, so daß ein Nockentrieb bei verschiedenen Lastbereichen des Verbrennungsmotors unterschiedliche Ventil-Erhebungskurven aufweist.

Erfindungsgemäß wird die Aufgabe durch die Merkmale des Anspruchs 1 und 9 gelöst.

Durch die unrunde Ausgestaltung des Übertragungselementes weist dieses im Querschnitt gesehen abwechselnd Erhebungen und Abflachungen auf.

Üblicherweise weisen Verbrennungsmotoren einen oder mehrere Zylinder auf. Der Erfindung liegt die Erkenntnis zugrunde, daß das unrunde Übertragungselement eine an die Anzahl der Zylinder, insbesondere an die Anzahl der Zylinder, die in einer Reihe folgend (Zylinderbank) angeordnet sind, entsprechende Anzahl Erhebungen und Abflachungen benötigt. Dieser geometrische Zusammenhang beruht darauf, daß Nocken bei einer stirnseitigen Betrachtung der Nockenwelle sternartig aus der Nockenwelle herausstehen, und für jede Nocke vorteilhaft eine Erhebung und eine Abflachung an dem Übertragungselement angeordnet ist, um die Nockenwelle entsprechend zu beschleunigen oder abzubremsen. In einem Einzylindermotor ist daher vorteilhaft vorgesehen, daß das Übertragungselement lediglich eine Erhebung und Abflachung aufweist. Bei Zweizylindermotoren ist zweckmäßig vorgesehen, daß das Übertragungselement im Querschnitt gesehen ellipsenförmig ausgestaltet ist. Bei Dreizylindermotoren ist das Übertragungselement im Querschnitt gesehen dreieckig ausgestaltet, wobei die Ecken des Übertragungselementes selbstverständlich abgerundet sind. In einem Vierzylindermotor ist ein im Querschnitt gesehen viereckiges Übertragungselement einsetzbar, wobei dessen Ecken ebenfalls abgerundet sind. Bei V-förmig zueinander angeordneten Zylinderreihen ist für jede Zylinderreihe ein Übertragungselement vorteilhaft. Bei einem V6-Motor sind beispielsweise zwei im Querschnitt gesehen dreieckige Übertragungselemente vorgesehen.

Günstig im Sinne der Erfindung ist, wenn das Übertragungselement der Nockenwelle zugeordnet ist, wobei das Übertragungselement selbstverständlich auch der Kurbelwelle zugeordnet sein kann. Denkbar ist allerdings auch, daß sowohl an der Nockenwelle als auch an der Kurbelwelle jeweils ein unrundes Übertragungselement angeordnet sein könnte.

Durch die unrunde Ausgestaltung des Übertragungselementes wird vorteilhaft erreicht, daß sich das Übersetzungsverhältnis konstant wechselnd verändert.

Da der Nockentrieb üblicherweise eine Kette oder einen Zahnriemen zur Übertragung der Drehbewegung von der Kurbelwelle auf die Nockenwelle aufweist, ist das Übertragungselement zweckmäßig als Zahnscheibe bzw. Zahnrad ausgestaltet.

Um die Dauer der Öffnungszeit zwischen einer langen Öffnungszeit oder einer kurzen Öffnungszeit eines jeweiligen Ventils zu verändern, ist es günstig im Sinne der Erfindung, wenn dem Nockentrieb zumindest eine Vorrichtung zur Nockenphasenverstellung (VCT) zugeordnet ist. Zweckmäßigerweise ist die VCT der Nockenwelle zugeordnet, wobei in einer vorteilhaften Ausgestaltung auch der Kurbelwelle eine zweite VCT zugeordnet ist, oder nur der Kurbelwelle eine VCT zugeordnet sein kann.

Wird die Nockenwelle mittels der VCT um 90° relativ zum Übertragungselement entgegen dem Uhrzeigersinn gedreht, wird gleichzeitig die Kurbelwelle mittels der zweiten VCT um 90° im Uhrzeigersinn gedreht. Wegen der Drehung der Kurbelwelle um + 90° und der Drehung der Nockenwelle um - 90° bleibt hierbei vorteilhafterweise die Nockenphaseneinstellung gleich bzw. unverändert. Die VCT selbst wird beispielsweise über eine Betätigung eines Gaspedals gesteuert. Selbstverständlich kann aber auch eine Phasenverstellung an der Nockenwelle durchgeführt werden, sofern dies gewünscht ist.

Weitere vorteilhafte Ausgestaltungen der Erfindung sind in den Unteransprüchen und der folgenden Figurenbeschreibung offenbart. Es zeigen:
- Fig. 1: Einen Nockentrieb im Querschnitt mit einem unrunden Übertragungselement,
- Fig. 2: den Nockentrieb aus Figur 1 nach einer Viertelumdrehung,
- Fig. 3: einen Nockentrieb in einem Querschnitt mit einem unrunden Übertragungselement bei Teillast bzw. Leerlauf des Verbrennungsmotors,
- Fig. 4: den Nockentrieb aus Figur 3 nach einer Viertelumdrehung,
- Fig. 5: zwei Ventil-Erhebungskurven, zum einen für einen Nockentrieb gemäß Figur 1 und 2 und zum anderen für einen Nockentrieb gemäß Figur 3 und 4.

In den unterschiedlichen Figuren sind gleiche Teile stets mit demselben Bezugszeichen versehen, so daß diese in der Regel auch nur einmal beschrieben werden.

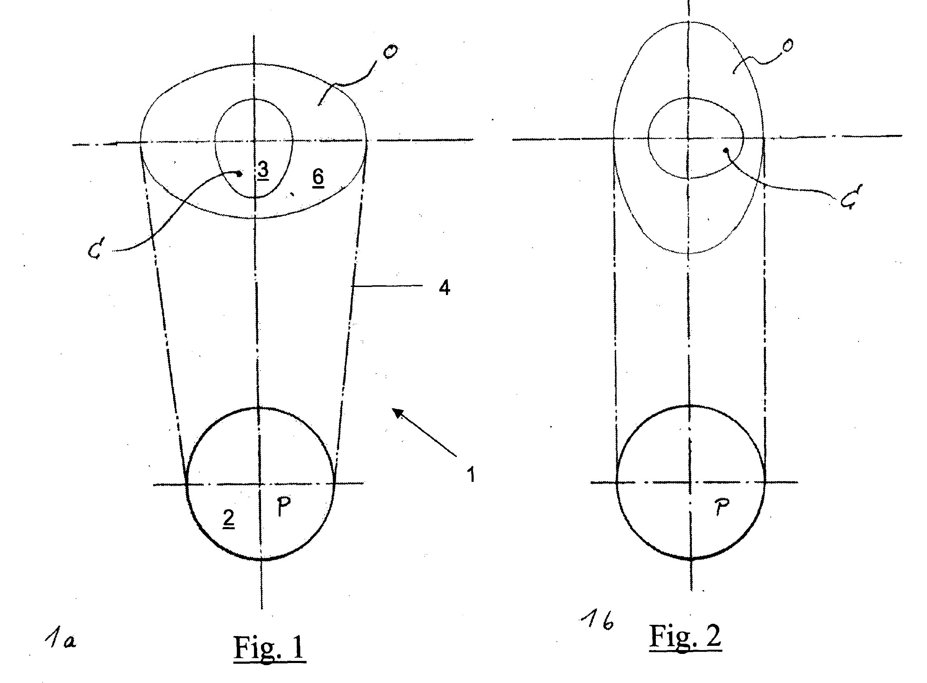

Figur 1 zeigt einen Nockentrieb 1 eines Verbrennungsmotors. Der Nockentrieb 1 weist eine Kurbelwelle auf, welche durch die gewählte Darstellung durch eine Kurbelwellenriemenscheibe 2 verdeckt ist. Zum Antrieb einer Nockenwelle 3 ist ein Zahnriemen 4 um die Kurbelwellenriemenscheibe 2 und ein im Querschnitt gesehen unrundes Übertragungselement 6 gelegt. Das im Querschnitt gesehen unrunde Übertragungselement 6 ist in dem dargestellten Ausführungsbeispiel der Nockenwelle 3 zugeordnet. Der in Figur 1 dargestellte Nockentrieb ist Bestandteil eines beispielhaften Zweizylindermotors, weswegen das Übertragungselement 6 im Querschnitt gesehen ellipsenförmig ausgestaltet ist. Die folgende Beschreibung bezieht sich daher auch nur auf die beispielhaft dargestellte Ausführung des Übertragungselementes 6, wobei selbstverständlich bei einem oder mehreren Zylindern eine entsprechende Ausgestaltung des Übertragungselementes 6 vorgesehen ist.

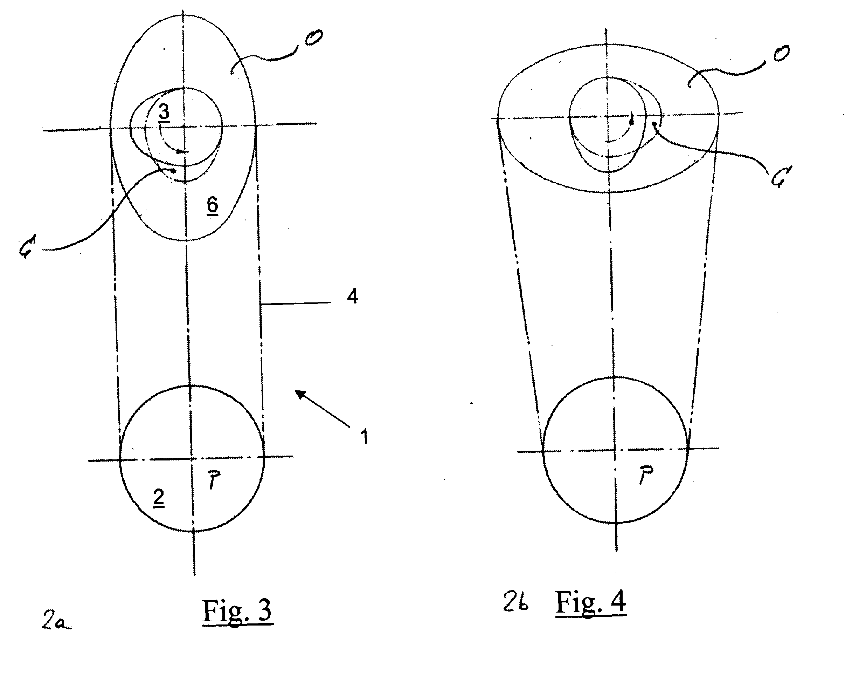

Die Figuren 1 und 2 zeigen eine Einstellung des Nockentriebes 1 während eines Voll-Lastbetriebes des Verbrennungsmotors. Im Unterschied dazu zeigen die Figuren 3 und 4 eine Einstellung des Nockentriebes 1 während eines Teil-Lastbetriebes bzw. bei einem Leerlauf des Verbrennungsmotors.

Dem Nockentrieb 1 ist zumindest eine nicht dargestellte Vorrichtung zur Nockenphasenverstellung (VCT) zugeordnet. In dem bevorzugten Ausführungsbeispiel ist sowohl der Nockenwelle 3 als auch der Kurbelwelle jeweils eine VCT zugeordnet.

Die VCT wird beispielsweise über die Betätigung eines Gaspedals gesteuert. Wird das Gaspedal derart betätigt, daß der Verbrennungsmotor in einem Vollastbereich betrieben wird, bewirken die beiden VCT eine Einstellung des Nockentriebes gemäß Figur 1 und 2. Wird das Gaspedal dagegen derart betätigt, daß der Verbrennungsmotor in einem Teillast- bzw. Leerlaufbereich betrieben wird, bewirken die beiden VCT eine Einstellung des Nockentriebes gemäß Figur 3 und 4. In den jeweiligen Figuren ist allerdings jeweils ein Maximum also der Vollastbereich bzw. der Leerlaufbereich dargestellt. Selbstverständlich sind Zwischenbereiche korrespondierend einstellbar.

Mittels der VCT, welche der Nockenwelle 3 zugeordnet ist, kann diese relativ zum Übertragungselement 6 beispielsweise um 90° entgegen dem Uhrzeigersinn gedreht werden. Hierdurch ergibt sich allerdings eine Phasenverstellung, weswegen vorteilhaft vorgesehen ist, daß die zweite VCT die Kurbelwelle bzw. die Kurbelwellenriemenscheibe 2 beispielsweise um 90° im Uhrzeigersinn verdreht, wodurch die Phasenverstellung aufgehoben wird.

Aufgrund der Drehung der Kurbelwellenriemenscheibe 2 um + 90° und der Drehung der Nockenwelle 3 um - 90° bleibt die Nockenphase im Vergleich von Figur 1 zu Figur 3 gleich bzw. unverändert.

Selbstverständlich ist diese beispielhaft genannte relative Verdrehung bei im Querschnitt gesehen anderen Ausgestaltungen des Übertragungselementes entsprechend anzupassen. Bei einem im Querschnitt gesehen viereckigen Übertragungselement könnte das Übertragungselement beispielsweise um 45° entgegen dem Uhrzeigersinn gedreht werden.

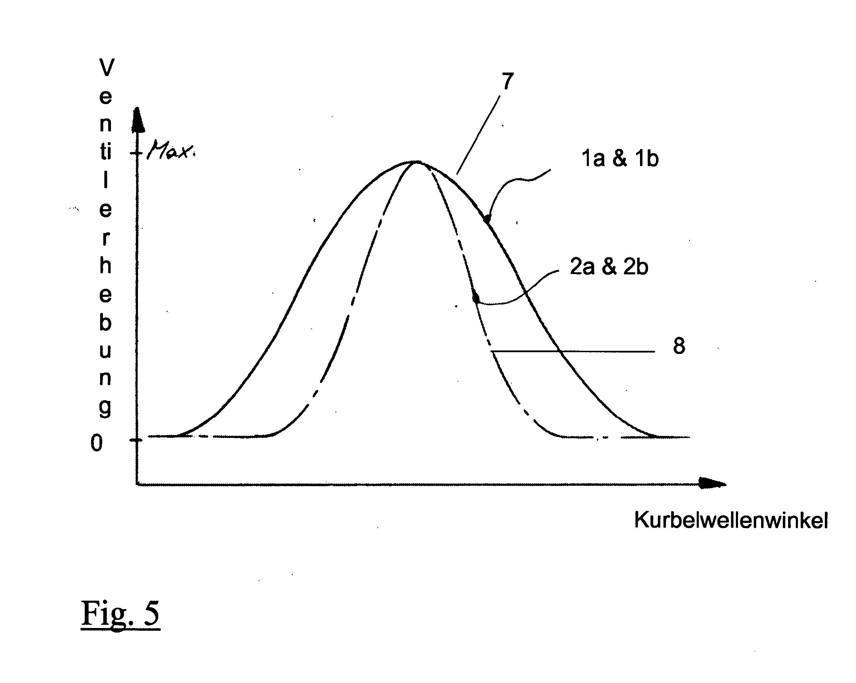

Wegen der im Querschnitt gesehen unrunden Ausgestaltung des Übertragungselementes 6 wird das Übersetzungsverhältnis der Nockenwelle 3 zur Kurbelwelle während der Rotation konstant wechselnd verändert, was deutlich aus einem Vergleich der Figuren 1 und 2 bzw. 3 und 4 hervorgeht. Von daher kann die Rotationsbewegung des unrunden Übertragungselementes 6 als Drehschwingung bezeichnet werden, da das Übertragungselement 6 sein Hebelverhältnis zur Kurbelwelle während der Umdrehung ändert, weshalb ein überstrichener Nockenwinkel nicht linear zum überstrichenen Kurbelwinkel ist. Mittels der vorteilhaften Kombination des unrunden Übertragungselementes 6 mit zumindest einer VCT kann die Dauer der Öffnungszeit zwischen einer langen Öffnungszeit des jeweiligen Ventils oder einer kurzen Öffnungszeit des jeweiligen Ventils verändert werden. Damit wird vorteilhaft erreicht, daß der Nockentrieb 1 bei verschiedenen Lastbereichen des Verbrennungsmotors unterschiedliche Ventil-Erhebungskurven 7 bzw. 8 (Figur 5) aufweist.

In Figur 5 ist jeweils eine Ventil-Erhebungskurve 7 bzw. 8 für die Lastbereiche nach Figur 1 bzw. Figur 3 dargestellt. Hierbei zeigt die durchgezogene Linie 7 den Vollastbereich nach Figur 1 und die gestrichelte Linie 8 einen Leerlaufbereich gemäß Figur 3. Deutlich erkennbar ist, daß die Form der beiden unterschiedlichen Ventil-Erhebungskurven 7 bzw. 8 verändert wurde, wodurch ein vollvariabler Ventiltrieb geschaffen wurde. Die einhüllende Kurve 7 zeigt hierbei einen hohen Füllungsgrad eines Verbrennungsraumes des Verbrennungsmotors mit einem Kraftstoff-LuftGemisch. Deutlich erkennbar ist in Figur 5, daß bei dem Teillast- bzw. Leerlaufbereich ein an die verringerte Motorlast angepaßter Füllungsgrad erreicht wird, wodurch Drosselverluste, insbesondere im Teillast- bzw. Leerlaufbereich minimiert werden. Damit ist der Kraftstoffverbrauch im Teillastbereich oder in einem niedrigen Lastbereich bzw. Leerlaufbereich deutlich vermindert.

Vorteilhafterweise wird mit der erfindungsgemäßen Ausgestaltung erreicht, daß die Mittellagen beider Ventil-Erhebungskurven 7 bzw. 8 gleich sind.

## Patentansprüche

1. Verfahren zur Verstellung einer Ventilöffnungsdauer in einem Verbrennungsmotor mit einem Nockentrieb (1), der eine Kurbelwelle und zumindest eine Nockenwelle (3) aufweist,
wobei dem Nockentrieb (1) zumindest ein im Querschnitt gesehen unrundes Übertragungselement (6) zugeordnet ist, und wobei ein Übersetzungsverhältnis zwischen der Nockenwelle (3) und der Kurbelwelle während einer Umdrehung verändert wird, **dadurch gekennzeichnet, dass** das unrunde Übertragungselement (6) im Querschnitt gesehen abwechselnd Erhebungen und Abflachungen aufweist, und wobei dem Nockentrieb (1) zumindest eine Vorrichtung zur Nockenphasenverstellung (VCT) zugeordnet ist, wobei durch eine Kombination des im Querschnitt gesehen unrunden Übertragungselementes (6) mit der zumindest einen VCT eine Dauer der Öffnungszeit zwischen einer langen Öffnungszeit eines jeweiligen Ventils oder einer kurzen Öffnungszeit des jeweiligen Ventils veränderbar ist, wobei die Nockenwelle (3) mittels der VCT relativ zum Übertragungselement (6) verdrehbar ist.

2. Verfahren nach Anspruch 1,
**dadurch gekennzeichnet, daß**
das Übertragungselement (6) im Querschnitt gesehen ellipsenförmig ausgestaltet ist.

3. Verfahren nach Anspruch 1,
**dadurch gekennzeichnet, daß**
das Übertragungselement (6) im Querschnitt gesehen dreieckig, vorzugsweise mit abgerundeten Ecken ausgestaltet ist.

4. Verfahren nach Anspruch 1,
**dadurch gekennzeichnet, daß**
das Übertragungselement (6) im Querschnitt gesehen viereckig, vorzugsweise mit abgerundeten Ecken ausgestaltet ist.

5. Verfahren nach einem der Ansprüche 1 bis 4,
**dadurch gekennzeichnet, daß**
sich das Übersetzungsverhältnis konstant wechselnd verändert, wobei das Übertragungselement (6) sein Hebelverhältnis zur Kurbelwelle während der Umdrehung verändert.

6. Verfahren nach einem der vorhergehenden Ansprüche,
**dadurch gekennzeichnet, daß**
das Übertragungselement (6) der Nockenwelle (3) zugeordnet ist.

7. Verfahren nach einem der vorhergehenden Ansprüche,
**dadurch gekennzeichnet, daß**
das Übertragungselement (6) als Zahnscheibe bzw. Zahnrad ausgestaltet ist.

8. Verfahren nach einem der vorhergehenden Ansprüche,
**dadurch gekennzeichnet, daß**
sowohl der Nockenwelle (3) als auch der Kurbelwelle eine Vorrichtung zur Nockenphasenverstellung (VCT) zugeordnet ist.

9. Verbrennungsmotor mit einem Nockentrieb (1), der eine Kurbelwelle und zumindest eine Nockenwelle (3) aufweist, nach einem der vorhergehenden Ansprüche.

## Claims

1. Method for adjusting a valve opening duration in an internal combustion engine having a cam drive (1) which has a crankshaft and at least one camshaft (3),
the cam drive (1) being assigned at least one transmission element (6) which is non-circular as viewed in cross section, and a transmission ratio between the camshaft (3) and the crankshaft being varied during a rotation, **characterized in that** the non-circular transmission element (6) has alternating elevations and flattened portions as viewed in cross section, and the cam drive (1) being assigned at least one device for cam phase adjustment (VCT), it being possible, by means of a combination of the transmission element (6) which is non-circular as viewed in cross section with the at least one VCT, for a duration of the opening time to be varied between a long opening time of the respective valve or a short opening time of the respective valve, it being possible for the camshaft (3) to be rotated relative to the transmission element (6) by means of the VCT.

2. Method according to Claim 1,
**characterized in that**
the transmission element (6) is of elliptical design as viewed in cross section.

3. Method according to Claim 1,
**characterized in that**
the transmission element (6) is of triangular design as viewed in cross section, preferably with rounded corners.

4. Method according to Claim 1,
**characterized in that**
the transmission element (6) is of tetragonal design as viewed in cross section, preferably with rounded corners.

5. Method according to one of Claims 1 to 4,
**characterized in that**
the transmission ratio varies in a constantly changing manner, with the transmission element (6) varying its lever ratio with respect to the crankshaft during the rotation.

6. Method according to one of the preceding claims,
**characterized in that**
the transmission element (6) is assigned to the camshaft (3).

7. Method according to one of the preceding claims,
**characterized in that**
the transmission element (6) is designed as a toothed disc or toothed wheel.

8. Method according to one of the preceding claims,
**characterized in that**
both the camshaft (3) and also the crankshaft are assigned a device for cam phase adjustment (VCT).

9. Internal combustion engine having a cam drive (1) which has a crankshaft and at least one camshaft (3), according to one of the preceding claims.

## Revendications

1. Procédé de réglage d'une durée d'ouverture de soupape dans un moteur à combustion interne avec une commande par came (1), qui présente un vilebrequin et au moins un arbre à came (3),
au moins un élément de transfert (6) non circulaire vu en section transversale étant associé à la commande par came (1), et un rapport de démultiplication entre l'arbre à came (3) et le vilebrequin étant modifié pendant une rotation, **caractérisé en ce que** l'élément de transfert non circulaire (6) présente, vu en section transversale, une alternance de rehaussements et de méplats, et au moins un dispositif de réglage de phase d'arbre à came (VCT) étant associé à la commande par came (1), une durée du temps d'ouverture entre un temps d'ouverture long d'une soupape respective ou un temps d'ouverture court de la soupape respective pouvant être modifiée par une combinaison de l'élément de transfert (6) non circulaire vu en section transversale avec l'au moins un VCT, l'arbre à came (3) pouvant être entraîné en rotation au moyen du VCT par rapport à l'élément de transfert (6).

2. Procédé selon la revendication 1,
**caractérisé en ce que**
l'élément de transfert (6) est configuré avec une forme ellipsoïdale vu en section transversale.

3. Procédé selon la revendication 1,
**caractérisé en ce que**
l'élément de transfert (6) est configuré sous forme triangulaire vu en section transversale, de préférence avec des coins arrondis.

4. Procédé selon la revendication 1,
**caractérisé en ce que**
l'élément de transfert (6) est configuré sous forme carrée vu en section transversale, de préférence avec des coins arrondis.

5. Procédé selon l'une quelconque des revendications 1 à 4,
**caractérisé en ce que**
le rapport de démultiplication est modifié de manière constante en alternance, l'élément de transfert (6) modifiant son rapport de levier par rapport au vilebrequin pendant la rotation.

6. Procédé selon l'une quelconque des revendications précédentes,
**caractérisé en ce que**
l'élément de transfert (6) est associé à l'arbre à came (3).

7. Procédé selon l'une quelconque des revendications précédentes,
**caractérisé en ce que**
l'élément de transfert (6) est configuré sous forme de disque denté ou de roue dentée.

8. Procédé selon l'une quelconque des revendications précédentes,
**caractérisé en ce que**
l'arbre à came (3) ainsi que le vilebrequin sont associés à un dispositif de réglage de phase d' arbre à came (VCT).

9. Moteur à combustion interne comprenant une commande de came (1) qui présente un vilebrequin et au moins un arbre à came (3) selon l'une quelconque des revendications précédentes.
